(19) **Europäisches Patentamt European Patent Office Office européen des brevets**

(11) **EP 2 891 672 A1**

(12) **EUROPEAN PATENT APPLICATION**
published in accordance with Art. 153(4) EPC

(43) Date of publication:
08.07.2015 Bulletin 2015/28

(21) Application number: 13832751.5

(22) Date of filing: 29.08.2013

(51) Int Cl.:
*C08G 18/70* (2006.01)     *C08K 5/521* (2006.01)
*G02B 1/04* (2006.01)     *G02B 3/00* (2006.01)

(86) International application number:
**PCT/KR2013/007787**

(87) International publication number:
**WO 2014/035166 (06.03.2014 Gazette 2014/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.08.2012   KR 20120095189**

(71) Applicant: **KOC Solution Co. Ltd.
Daejeon 305-380 (KR)**

(72) Inventors:
• **JANG, Dong Gyu
Daejeon 302-777 (KR)**

• **ROH, Soo Gyun
Daejeon 305-790 (KR)**
• **KIM, Jong Hyo
Daejeon 305-251 (KR)**
• **SO, Bong Keun
Daejeon 302-797 (KR)**
• **SEO, Jin Moo
Daejeon 302-838 (KR)**

(74) Representative: **Serjeants LLP
Dock
75 Exploration Drive
Leicester, LE4 5NU (GB)**

(54) **METHOD FOR MANUFACTURING THIOURETHANE-BASED OPTICAL MATERIAL**

(57)     Disclosed is a method of preparing a thiourethane based optical material. In particular, a method of preparing a high-quality optical material, which is colorless and transparent and is not deformed, at a high yield without generation of striae, whitening, and microbubbles is disclosed. The method of preparing the thiourethane based optical material according to present invention is characterized in that, before cast polymerization, a polymerizable composition including a polythiol compound and a polyisocyanate compound is treated at a specific vacuum condition and then injected into a mold. The thiourethane based optical material prepared according to the present invention may be widely used in a variety of fields as a substitute of conventional optical materials.

EP 2 891 672 A1

**Description**

Technical Field

The present invention relates to a method of preparing a thiourethane based optical material. More particularly, the present invention relates to a method of preparing a high-quality optical material, which is colorless and transparent and is not transformed, at a high yield without generation of striae, whitening, and microbubbles.

Background Art

Plastic optical lenses were introduced as alternatives to glass lenses having problems such as a high specific gravity and low impact resistance. As representative examples, there are polyethylene glycol bis(allyl carbonate), polymethylmethacrylate, diallyl phthalate, and the like. Although optical lenses prepared from the polymers exhibit superior properties such as moldability, dyeability, adhesive properties of hard coated films, impact resistance, and the like, lenses are thickened due to of a low refractive index of approximately 1.50 (nD) and 1.55(nD). Accordingly, in order to reduce the thicknesses of lenses, a variety of attempts have been made to develop an optical material having a high refractive index.

In Korean Patent Nos. 10-0136698, 10-0051275, 10-0051939, 10-0056025, 10-0040546, 10-0113627, and the like, a thiourethane based optical lens was obtained by heat curing a polyisocyanate compound and a polythiol compound. The thiourethane based optical material exhibits superior optical properties such as transparency, Abbe's number, transmissivity, tensile strength, and the like, and, thus, is widely used as a material of an optical lens. However, when an optical material is prepared by curing a polymerizable composition including a polythiol compound and a general isocyanate compound, striae, whitening, and microbubbles occur, and, as such, quality of a lens may be deteriorated. When, as the isocyanate compound, 3,8-bis(isocyanatomethyl)tricyclo[5,2,1,02,6]decane, 3,9-bis(isocyanatomethyl)tricyclo[5,2,1,02,6]decane, 4,8-bis(isocyanatomethyl)tricyclo[5,2,1,02,6]decane, 4,9-bis(isocyanatomethyl)tricyclo[5,2,1,02,6]decane, 2,5-bis(isocyanatomethyl)bicyclo[2,2,1]heptane, 2,6-bis(isocyanatomethyl)bicyclo[2,2,1]heptane, and the like, which have excellent compatibility with the polythiol compound, are used, the phenomena are decreased but production costs increase due to high cost of the isocyanate compound. On the other hand, isophorone diisocyanate, dicyclohexylmethane-4,4-diisocyanate($H_{12}$MDI), hexamethylene-1,6-diisocyanate, and the like are cheap and are general isocyanate compounds. Accordingly, when such compounds are used, production costs of the thiourethane based optical material may be reduced. However, when lenses are prepared by polymerizing a composition mixed with the polythiol compound, phenomena such as striae, whitening, microbubbles, and the like significantly occur. Since such striae, whitening, or microbubble generation deteriorates lens quality, there has been a need to inhibit such phenomena. In addition, reduction of production costs is a major concern in lens manufacture. In this regard, since generation of striae, whitening, and microbubbles decreases a yield of lenses and, thus, increases production costs, there is an urgent need to inhibit the phenomena and to reduce production costs.

Prior Art Literature

(Patent Literature 1) Korean Patent No. 10-0136698
(Patent Literature 2) Korean Patent No. 10-0051275
(Patent Literature 3) Korean Patent No. 10-0051939
(Patent Literature 4) Korean Patent No. 10-0056025
(Patent Literature 5) Korean Patent No. 10-0040546

Technical Problem

When a thiourethane based optical material is prepared by polymerizing a polythiol compound and an isocyanate compound, striae, whitening, and microbubbles may occur. Such a phenomenon is more significant when cheap and general isocyanate is used. "Striae" means a phenomenon that a portion of a refractive index becomes different from a surrounding normal refractive index due to different compositions, when an optical lens is prepared by heat curing an optical lens resin composition. "Whitening" and "white turbidity" mean a phenomenon that a lens becomes cloudy. Generally, "whitening" means a partial phenomenon and "white turbidity" means a phenomenon that totally becomes cloudy. In the present invention, "whitening" includes "white turbidity". Striae, whitening, and microbubbles negatively affect quality and performance of an optical material.

Inventors of the present invention unexpectedly confirmed that there is an important correlation between a vacuum degree during a deformation process before injecting a polymerizable composition including the polythiol compound and the isocyanate compound into a mold and generation of striae, whitening, and microbubbles of a finally obtained lens, and, although the isocyanate compound is used, generation of striae, whitening and microbubbles may be dramatically suppressed through vacuum treatment of a composition under specific conditions. That is, when the polymerizable composition including the polythiol compound and the isocyanate compound (particularly general isocyanate compound) is treated under proper vacuum degree and then cast polymerized, a finally obtained lens almost never exhibits striae, whitening, microbubbles.

Therefore, the present invention has been made in view of the above problems, and it is an object of the present invention to provide a method of preparing a high-quality thiourethane based optical material at high yield without generation of striae, whitening, or microbubbles. In particular, the present invention aims to provide a method of preparing a high-quality thiourethane based optical material at a high yield without generation of striae, whitening, or microbubbles using the polymerizable composition including the polythiol compound and a general isocyanate compound.

Technical Solution

In accordance with an aspect of the present invention, the above and other objects can be accomplished by the provision of a method of preparing a thiourethane based optical material, the method including cast polymerizing a polymerizable composition including a polythiol compound and polyisocyanate compound by injecting the polymerizable composition into a mold after vacuum treating the polymerizable composition at a condition that a value of X in Formula 1 below becomes 0.01 to 2:

$$[\text{Formula 1}]$$

$$X = T \times 1/t$$

wherein T is a vacuum degree in torr, t is vacuum-treatment time (min), and T is 0.01 to 20.

In accordance with another aspect of the present invention, there are provided an optical material obtained according to the method and an optical lens composed of the optical material. The optical lens particularly includes eyeglass lenses or polarizing lenses.

Advantageous Effects

According to the present invention, a high-quality lens which is colorless and transparent and is not deformed without striae, whitening, or microbubbles, may be prepared by treating a composition at a proper vacuum condition before cast polymerizing the composition, and production costs may also be reduced due to improved yield. In particular, since a high-quality lens which does not exhibit striae, whitening, or microbubbles may be prepared at a high yield even using a general polyisocyanate compound according to the present invention, production costs of thiourethane based lenses conventionally produced at high production costs may be dramatically lowered.

Best Mode

A method of preparing a thiourethane based optical material according to the present invention includes cast polymerizing after injecting a polymerizable composition into a mold after vacuum treating the polymerizable composition including a polythiol compound and a polyisocyanate compound under a condition that a value of X in Formula 1 below becomes 0.01 to 2.

$$[\text{Formula 1}]$$

$$X = T \times 1/t$$

wherein T is a vacuum degree in torr, t is vacuum-treatment time (min), and T is 0.01 to 20.

To prepare the thiourethane based optical material, cast polymerization by injecting into a mold is carried out after obtaining a polymerizable composition by mixing ingredients and additives such as a mold release agent with a general polythiol compound and polyisocyanate compound. In conventional methods, a composition was injected into a mold by performing a deformation process before polymerization. However, conventional deformation processes were recognized as processes to maximally suppress bubble generation during polymerization and, although the deformation processes are carried out, microbubbles occurred in some cases. The present inventors first discovered and confirmed that there is an important correlation between a vacuum degree during deformation and generation of striae, whitening, or microbubbles in a lens. Therefore, according to the present invention, a thiourethane based optical material which does not exhibit striae, whitening, or microbubbles is prepared by suppressing striae, whitening, or microbubble generation in a lens finally obtained through vacuum treatment of a polymerizable composition at a specific vacuum condition, namely, a condition that a value of X in Formula 1 becomes 0.01 to 2. In particular, according to the present invention, a thiourethane based optical material which does not exhibit striae, whitening, or microbubbles is prepared by vacuum treating a polymerizable composition at a condition that a value of X in Formula 1 becomes 0.01 to 2, even using cheap and general isocyanate. T of Formula 1 is defined as initial pressure (torr) when initial vacuum condition is formed.

The vacuum treatment may exhibit greater effects when carried out at a specific temperature. The vacuum treatment is preferably carried out at 21 to 40°C, more particularly 28 to 36°C. When the vacuum treatment was carried out within these temperature ranges, a high-quality lens not exhibiting striae, whitening and microbubbles was obtained. Inventors of the present invention first discovered that there is an important correlation between temperature during vacuum treatment and lens quality. Conventional preparation methods in which such a correlation was not recognized did not control temperature during a vacuum deformation process and controlled temperature during polymerization to a temperature lower below the above temperature ranges. In the present invention, temperature during vacuum treatment of the thiourethane based polymerizable composition was controlled within a proper range and, as such, a high-quality thiourethane based optical material which is transparent and is not transformed may be more easily prepared.

The polyisocyanate compound of the present invention is not specifically limited and may be any compounds having at least one isocyanate group and/or isothiocyanate group. However, when production costs are considered, a cheap and general polyisocyanate compound is preferably used. As the general polyisocyanate compound, any one or a mixture of two or more of isophorone diisocyanate, dicyclohexylmethane-4,4-diisocyanate ($H_{12}$MDI), hexamethylene diisocyanate, xylylene diisocyanate, and tolylene diisocyanate may be used. In addition, the general polyisocyanate compound may be used by mixing an iso(thio)cyanate compound. As the iso(thio)cyanate compound, an aliphatic isocyanate compound such as 2,2-dimethylpentane diisocyanate, 2,2,4-trimethylhexane diisocyanate, butene diisocyanate, 1,3-butadiene-1,4-diisocyanate, 2,4,4-trimethyl hexamethylene diisocyanate, 1,6,11-undeca triisocyanate, 1,3,6-hexamethylene triisocyanate, 1,8-diisocyanate-4-isocyanate methyl octane, bis(isocyanate ethyl)carbonate, bis(isocyanate ethyl)ether, or the like; a cycloaliphatic isocyanate compound such as isophorone diisocyanate, 1,2-bis(isocyanate methyl)cyclohexane, 1,3-bis(isocyanate methyl)cyclohexane, 1,4-bis(isocyanate methyl)cyclohexane, dicyclohexylmethane diisocyanate, cyclohexane diisocyanate, methylcyclohexane diisocyanate, dicyclohexyl dimethylmethane isocyanate, 2,2-dimethyl dicyclohexylmethane isocyanate, or the like; an aromatic isocyanate compound such as bis(isocyanatoethyl)benzene, bis(isocyanatopropyl)benzene, bis(isocyanatobutyl)benzene, bis(isocyanatomethyl)naphthalene, bis(isocyanatomethyl)diphenylether, phenylene diisocyanate, ethylphenylene diisocyanate, isopropyl phenylene diisocyanate, dimethyl phenylene diisocyanate, diethyl phenylene diisocyanate, diisopropyl phenylene diisocyanate, trimethylbenzene triisocyanate, benzene triisocyanate, biphenyl diisocyanate, toluidine diisocyanate, 4,4-diphenylmethane diisocyanate, 3,3-dimethyl diphenylmethane-4,4-diisocyanate, bibenzyl-4,4-diisocyanate, bis(isocyanate phenyl)ethylene, 3,3-dimethoxybiphenyl-4,4-diisocyanate, hexahydro benzene diisocyanate, hexahydro diphenylmethane-4,4-diisocyanate, or the like; a sulfur-containing aliphatic isocyanate compound such as bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatopropyl)disulfide, bis(isocyanatomethylthio)methane, bis(isocyanatoethylthio)methane, bis(isocyanatoethylthio)ethane, bis(isocyanatomethylthio)ethane, 1,5-diisocyanate-2-isocyanatomethyl-3-thiapentane, or the like; a sulfur-containing heterocyclic isocyanate compound such as a sulfur-containing aromatic isocyanate compound such as diphenylsulfide-2,4-diisocyanate, diphenylsulfide-4,4-diisocyanate, 3,3-dimethoxy-4,4-diisocyanatedibenzylthioether, bis(4-isocyanatomethylbenzene)sulfide, 4,4-methoxybenzenethioethylene glycol-3,3-diisocyanate, diphenyldisulfide-4,4-diisocyanate, 2,2-dimethyl diphenyl disulfide-5,5-diisocyanate, 3,3-dimethyl diphenyl disulfide-5,5-diisocyanate, 3,3-dimethyl diphenyl disulfide-6,6-diisocyanate, 4,4-dimethyl diphenyl disulfide-5,5-diisocyanate, 3,3-dimethoxy diphenyldi sulfide-4,4-diisocyanate, 4,4-dimethoxy diphenyl disulfide-3,3-diisocyanate, or the like; 2,5-diisocyanate thiophene, 2,5-bis(isocyanatomethyl)thiophene, 2,5-diisocyanate tetrahydrothiophene, 2,5-bis(isocyanatomethyl)tetrahydrothiophene, 3,4-bis(isocyanatomethyl)tetrahydrothiophene, 2,5-diisocyanate-1,4-dithian, 2,5-bis(isocyanatomethyl)-1,4-dithian, 4,5-diisocyanate-1,3-dithiolan, 4,5-bis(isocyanatomethyl)-1,3-dithiolan, 4,5-bis(isocyanatomethyl)-2-methyl-1,3-dithiolan, or the like; or the like may be used alone or as a mixture of two or more thereof.

The polythiol compound is not specifically limited and may be one or a mixture of two or more of compounds having at least one thiol group. For example, the polythiol compound may be bis(2-mercaptoethyl)sulfide, 4-mercaptomethyl-1,8-dimercapto-3,6-dithiaoctane, 2,3-bis(2-mercaptoethylthio)propane-1-thiol, 2,2-bis(mercaptomethyl)-1,3-propanedithiol, tetrakis(mercaptomethyl)methane; 2-(2-mercaptoethylthio)propane-1,3-dithiol, 2-(2,3-bis(2-mercaptoethylthio)propylthio)ethanethiol, bis(2,3-dimercaptopropanyl)sulfide, bis(2,3-dimercaptopropanyl)disulfide, 1,2-bis(2-mercaptoethylthio)-3-mercaptopropane, 1,2-bis(2-(2-mercaptoethylthio)-3-mercaptopropylthio)ethane, bis(2-(2-mercaptoethylthio)-3-mercaptopropyl)sulfide, 2-(2-mercaptoethylthio)-3-2-mercapto-3-[3-mercapto-2-(2-mercaptoethylthio)-propylthio]propylthio-propane-1-thiol, 2,2-bis-(3-mercapto-propionyloxymethyl)-butyl ester, 2-(2-mercaptoethylthio)-3-(2-(2-[3-mercapto-2-(2-mercaptoethylthio)-propylthio]ethylthio)ethylthio)propane-1-thiol, (4R,11S)-4,11-bis(mercaptomethyl)-3,6,9,12-tetrathiatetradecane-1,14-dithiol, (S)-3-((R-2,3-dimercaptopropyl)thio)propane-1,2-dithiol, (4R,14R)-4,14-bis(mercaptomethyl)-3,6,9,12,15-pentathiaheptane-1,17-dithiol,(S)-3-((R-3-mercapto-2-((2-mercaptoethyl)thio)propyl)thio)propyl)thio)-2-((2-mercaptoethyl)thio)propane-1-thiol, 3,3'-dithiobis(propane-1,2-dithiol), (7R,11S)-7,11-bis(mercaptomethyl)-3,6,9,12,15-pentathiaheptadecane-1,17-dithiol, (7R,12S)-7,12-bis(mercaptomethyl)-3,6,9,10,13,16-hexathiaoctadecane-1,18-dithiol, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), trimethylolpropane tris(3-mercaptopropionate), pentaerythritol tetrakis(2-mercaptoacetate), bispentaerythritol-ether-hexakis(3-mercaptopropionate), 1,1,3,3-tetrakis(mercaptomethylthio)propane, 1,1,2,2-tetrakis(mercaptomethylthio)ethane, 4,6-bis(mercaptomethylthio)-1,3-dithian, 2-(2,2-bis(mercaptodimethylthio)ethyl)-1,3-dithian, or the like. In addition, one or a mixture of two or more of compounds having at least one thiol group may be used. Furthermore, a modified polymer obtained by prepolymerizing the polythiol compound with a compound having an unsaturated bond, such as an isocyanate or thioepoxy compound, a thietane compound or a resin modifier may also be used.

The polymerizable composition may further include an olefin compound as a reactive resin modifier so as to improve optical properties of an optical resin copolymer (optical material) and, thus, control impact resistance, a specific gravity, viscosity of monomers, and the like. The olefin compound added as a reactive resin modifier may, for example, be a (meth)acrylate compound such as benzyl acrylate, benzyl methacrylate, butoxyethyl acrylate, butoxymethyl methacrylate, cyclohexyl acrylate, cyclohexyl methacrylate, 2-hydroxyethyl acrylate, 2-hydroxymethyl methacrylate, glycidyl acrylate, glycidylmethacrylate, phenoxy ethylacrylate, phenoxyethylmethacrylate, phenylmethacrylate, ethylene glycol diacrylate, ethylene glycol dimethacrylate, diethyleneglycol diacrylate, diethyleneglycol dimethacrylate, triethylene glycol diacrylate, triethylene glycol dimethacrylate, tetraethylene glycol diacrylate, tetraethylene glycol dimethacrylate, polyethylene glycol diacrylate, polyethylene glycol dimethacrylate, neopentylglycol diacrylate, neopentylglycol dimethacrylate, ethylene glycol bisglycidyl acrylate, ethylene glycolbisglycidylmethacrylate, bisphenol A diacrylate, bisphenol A dimethacrylate, 2,2-bis(4-acroxyethoxyphenyl)propane, 2,2-bis(4-methacroxyethoxyphenyl)propane, 2,2-bis(4-acroxydiethoxyphenyl)propane, 2,2-bis(4-methacroxydiethoxyphenyl)propane, bisphenol F diacrylate, bisphenol F dimethacrylate, 1,1-bis(4-acroxyethoxyphenyl)methane, 1,1-bis(4-methacroxyethoxyphenyl)methane, 1,1-bis(4-acroxydiethoxyphenyl)methane, 1,1-bis(4-methacroxydiethoxyphenyl)methane, dimethyloltricyclodecanediacrylate, trimethylolpropanetriacrylate, trimethylolpropanetrimethacrylate, glyceroldiacrylate, glyceroldimethacrylate, pentaerythritoltriacrylate, pentaerythritoltetracrylate, pentaerythritoltetramethacrylate, methylthioacrylate, methylthiomethacrylate,phenylthioacrylate, benzylthiomethacrylate, xylylenedithioldiacrylate, xylylenedithioldimethacrylate, mercaptoethylsulfidediacrylate, mercaptoethylsulfidedimethacrylate, or the like; or an allyl compound such as allylglycidylether, diallyl phthalate, diallylterephthalate, diallylisophthalate, diallylcarbonate, diethyleneglycol bis(allylcarbonate), or the like; and a vinyl compound such as styrene, chlorostyrene, methylstyrene, bromostyrene, dibromostyrene, divinylbenzene, 3,9-divinylspirobi(methdioxane), or the like, but a used compound is not limited thereto. The olefin compound may be used alone or as a mixture of two olefin compounds or more.

In the present invention, ratios, namely, functional group ratios of (NCO+NCS)/(SH+OH), of the isocyanate compound and the polythiol compound used as raw materials, and the raw materials including a resin modification compound are generally 0.5 to 3.0, particularly 0.6 to 2.0, more particularly 0.8 to 1.5.

The polymerizable composition, as needed, may further include undetermined ingredients such as a mold release agent, an ultraviolet ray absorbent, a dye, a stabilizer, a bluing agent, and the like. In addition, an epoxy compound; thioepoxy compound; or a compound or a metal compound having a vinyl group or an unsaturated group copolymerizable with a urethane resin composition may be further included therein.

As the mold release agent, a phosphoric ester compound, a silicon based surfactant, a fluorine based surfactant, and the like may used alone or as a mixture of two or more thereof. The mold release agent is included in an amount of particularly 0.001 to 10 wt% in the polymerizable composition. As the mold release agent, a phosphoric ester compound is particularly used. The phosphoric ester compound is prepared by adding 2 to 3 mol of an alcohol compound to phosphorus pentoxide ($P_2O_5$). Here, a variety of phosphoric ester compounds may be obtained according to alcohol types. As representative examples, there are ethylene oxide or propylene oxide added to aliphatic alcohol, and ethylene oxide or propylene oxide added to a nonylphenol group or the like. When the phosphoric ester compound including the ethylene oxide or the propylene oxide as a mold release agent is added to the polymerizable composition of the present invention, a high-quality optical material having superior releasing properties may be desirably obtained. The phosphoric ester compound used as a mold release agent is one or more selected from the group consisting of particularly polyoxyethylene nonylphenol ether phosphate (in an amount of 5 wt% including 5 mol of ethylene oxide, 80 wt% including 4 mol of ethylene oxide, 10 wt% including 3 mol of ethylene oxide, or 5 wt% including 1 mol of ethylene oxide), polyoxyethylene nonylphenyl phosphate (in an amount of 5 wt% including 9 mol of ethylene oxide, 80 wt% including 8 mol of ethylene oxide, 10 wt% including 7 mol of ethylene oxide, or 5 wt% including 6 mol of ethylene oxide), polyoxyethylene nonylphenol ether phosphate (in an amount of 3 wt% including 11 mol of ethylene oxide, 80 wt% including 8 mol of ethylene oxide, 5 wt% including 9 mol of ethylene oxide, 6 wt% including 7 mol of ethylene oxide, or 6 wt% including 6 mol of ethylene oxide), polyoxyethylene nonylphenol ether phosphate (in an amount of 3 wt% including 13 mol of ethylene oxide, 80 wt% including 12 mol of ethylene oxide, 8 wt% including 11 mol of ethylene oxide, 3 wt% including 9 mol of ethylene oxide, or 6 wt% including 4 mol of ethylene oxide), polyoxyethylene nonylphenol ether phosphate (in an amount of 3 wt% including 17 mol of ethylene oxide, 79 wt% including 16 mol of ethylene oxide, 10 wt% including 15 mol of ethylene oxide %, 4 wt% including 14 mol of ethylene oxide, or 4 wt% including 13 mol of ethylene oxide), polyoxyethylene nonylphenol ether phosphate (in an amount of 5 wt% including 21 mol of ethylene oxide, 78 wt% including 20 mol of ethylene oxide, 7 wt% including 19 mol of ethylene oxide, 6 wt% including 18 mol of ethylene oxide, or 4 wt% including 17 mol of ethylene oxide), and Zelec UN™.

In the present invention, an optical material is obtained through cast polymerization after vacuum treating the polymerizable composition under specific conditions. First, the vacuum treated polymerizable composition is injected into a forming mold using a gasket or tape for polymerization. Since polymerization condition greatly vary according to polymerizable compositions, catalyst types, the amount of the catalyst, mold shaper, and the like, the conditions are not specifically limited. However, the polymerization is carried out for 1 to 50 hours at approximately -50 to 150°C. In some cases, it is preferable to cure at 1 to 48 hours while maintaining 10 to 150°C or slowly elevating temperature.

As needed, treatment such as annealing or the like for the obtained polythiourethane resin may be carried out. Temperature of the treatment is generally 50 to 150°C, preferably 90 to 140°C, more preferably 100 to 130°C.

The polythiourethane resin of the present invention may be obtained as a variety of molded products by changing a mold at a cast polymerization process. Accordingly, the polythiourethane resin may be used in various uses as an optical resin of eyeglass lenses, camera lenses, light emitting diodes (LEDs), and the like. In particular, the polythiourethane resin is suitable for an optical material of eyeglass lenses, camera lenses, light emitting diodes, and the like, or an optical device.

As needed, one surface or both surfaces of a lens composed of the thiourethane based optical material of the present invention may be coated with a coating layer. The coating layer may, for example, be a primer layer, a hard coat layer, an anti-reflective layer, an anti-fogging coating layer, an anti-fouling layer, a water-repellent layer, or the like. These coating layers may be coated alone or by layering a plurality of coating layers. When both surfaces are coated with coating layers, the coating layers may be the same or different.

Examples

Now, the present invention will be described in more detail with reference to the accompanying drawings. These examples are provided for illustrative purposes only and should not be construed as limiting the scope and spirit of the present invention.

Test and evaluation methods

Properties of optical lenses prepared were measured according to experimental methods below. Results are summarized in Table 1 below.

1) Refractive index and Abbe's number: a DR-M4 as an Abbe's refractometer available from Atago was used for measurement.
2) Striae: 100 lenses were observed with the naked eye using USHIO USH-10D as a mercury arc lamp. Lenses exhibiting an arc shape were judged to have striae and striae generation rates were calculated.
3) Whitening: lenses were illuminated with illumination of 1800 LUX or more in a state that a surface process is not performed after polymerizing 100 lenses and then removing molds. The number of lenses exhibiting a partially cloudy phenomenon observed with the naked eye was converted into a percentage.
4) Microbubbles: 100 lenses were observed with the naked eye using USHIO USH-10D as a mercury arc lamp. The number of lenses exhibiting microbubbles was converted into a percentage.

Example 1

25.09 g of GMT (2-(2-mercaptoethylthio)propane-1,3-dithiol), 19.66 g of PETMP, 13.53 g of HDI, 41.72 g of IPDI, 0.1 g of BTC as a polymerization initiator, HTAQ (20 ppm) and PRD (10 ppm) as organic dyes, 1.5 g of HOPBT as an ultraviolet ray absorbent, and 0.1 g of a mold release agent (Zelec UN available from STEPAN) were mixed and dissolved at 23°C to prepare a uniform solution. Subsequently, the resultant solution was filtered at 2 torr for 5 minutes through a 1 $\mu$m PTFE filter while maintaining 23°C and injected into a molding flask composed a glass mold and tape. The molding flask was put in a polymerization oven and polymerization was performed by slowly elevating temperature from 23°C to 130°C over 21 hours. After polymerization, the molding flask was removed from the oven. Releasing properties from the molding flask were satisfied. An obtained resin was further annealed at 130°C for 4 hours. Properties of the obtained resin were as follows: a refractive index (nE) of 1.578, Abbe's number of 42, and heat resistance (Tg) of 116°C. A dissolved state before injecting into the molding flask was observed with the naked eye, existence of foreign materials was not observed after removing the resin from the form, whitening was not observed, and production of a high-quality resin was confirmed. Results evaluated according to the above evaluation methods are summarized in Table 1 below.

Examples 2 to 7

Each composition and lens were prepared according to compositions disclosed in Table 1 in the same manner as in Example 1 and properties thereof were evaluated. Results are summarized in Table 1 below.

Comparative Example 1

43.87 g of GST (2,3-bis(2-mercaptoethylthio)propane-1-thiol), 56.13 g of IPDI, 0.1 g of BTC as a polymerization initiator, HTAQ (20ppm) and PRD (10ppm) as an organic dye, 1.5 g of HOPBT as an ultraviolet ray absorbent, and 0.1 g of Zelec UN
available from STEPAN, as a mold release agent were mixed and dissolved at 28°C to prepare a uniform solution. Subsequently, the resultant solution was filtered at 0.01 torr for 0.5 minutes through a 1 $\mu$m PTFE filter while maintaining 28°C and injected into a molding flask composed a glass mold and tape. The molding flask was put in a polymerization oven and polymerization was performed by slowly elevating temperature from 28°C to 130°C over 21 hours. After polymerization, the molding flask was removed from the oven. Release properties from the molding flask were satisfied. An obtained resin was further annealing treated at 130°C for 4 hours. Properties of the obtained resin were as follows: a refractive index (nE) of 1.598, Abbe's number of 41, and heat resistance (Tg) of 132°C. A dissolved state before injecting into the molding flask was observed with the naked eye, existence of foreign materials was not observed after removing the resin from the form, and severe striae and whitening were observed. A striae phenomenon, a whitening phenomenon, microbubbles, and the like were evaluated. Results are summarized in Table 1 below.

Comparative Examples 2 to 3

Each composition and lens were prepared according to compositions disclosed in Table 1 in the same manner as in Comparative Example 1 and properties thereof were evaluated. Results are summarized in Table 1 below.

Table 1

| Classification | | Examples | | | | | | | Comparative Example | | |
|---|---|---|---|---|---|---|---|---|---|---|---|
| | | 1 | 2 | 3 | 4 | 5 | 6 | 7 | 1 | 2 | 3 |
| Vacuum degree (torr), time (min) | | 2 torr, 5 min | 0.1 torr, 1.5 min | 0.5 torr, 4 min | 4 torr, 80 min | 6 torr, 100 min | 10 torr, 120 min | 15 torr, 120 min | 0.01 torr, 0.5 min | 22 torr, 125 min | 0.5 torr, 4 min |
| Temperature (°C) during vacuum treatment | | 23 | 28 | 28 | 31 | 35 | 38 | 25 | 28 | 28 | 13 |
| Monomer composition (g) | GMT | 25.09 | | | | | | | | | |
| | GST | | 43.87 | | 42.60 | | 30.33 | 43.87 | 43.87 | 30.35 | 43.87 |
| | ETS-4 | | | 28.28 | | | | | | | |
| | BDMS | | | 4.45 | | | | | | | |
| | BMMS | | | | | 31.49 | | | | | |
| | PETMP | 19.66 | | 17.65 | | 17.98 | 18.28 | | | 18.25 | |
| | HDI | 13.53 | | 12.15 | 12.37 | 12.38 | 12.59 | | | 12.59 | |
| | IPDI | 41.72 | 56.13 | 37.47 | | 38.15 | 38.80 | 56.13 | 56.13 | 38.81 | 56.13 |
| | $H_{12}MDI$ | | | | 45.03 | | | | | | |
| Mold release agent (g) | Zelec UN | 0.1 | 0.1 | 0.1 | 0.1 | 0.1 | 0.1 | 0.1 | 0.1 | 0.1 | 0.1 |
| Ultraviolet ray absorbent(g) | HOPBT | 1.5 | 1.5 | 1.5 | 1.5 | 1.5 | 1.5 | 1.5 | 1.5 | 1.5 | 1.5 |
| Polymerization initiator (g) | BTC | 0.1 | 0.1 | 0.1 | 0.1 | 0.1 | 0.1 | 0.1 | 0.1 | 0.1 | 0.1 |
| Organic dye (ppm) | HTAQ | 20 | 20 | 20 | 20 | 20 | 20 | 20 | 20 | 20 | 20 |
| | PRD | 10 | 10 | 10 | 10 | 10 | 10 | 10 | 10 | 10 | 10 |

EP 2 891 672 A1

(continued)

| Classification | | Examples | | | | | | | Comparative Example | | |
|---|---|---|---|---|---|---|---|---|---|---|---|
| | | 1 | 2 | 3 | 4 | 5 | 6 | 7 | 1 | 2 | 3 |
| Properties of lens | Refractive index (nE, 20°C) | 1.580 | 1.598 | 1.591 | 1.593 | 1.590 | 1.585 | 1.598 | 1.598 | 1.585 | 1.598 |
| | Abbe's number | 42 | 41 | 42 | 42 | 43 | 43 | 41 | 41 | 42 | 41 |
| | Glass transition temp (Tg, °C) | 116 | 132 | 117 | 116 | 117 | 116 | 132 | 132 | 116 | 132 |
| | Striae | 3 | 4 | 3 | 3 | 5 | 2 | 3 | 36 | 38 | 15 |
| | Whitening | 6 | 9 | 5 | 6 | 8 | 10 | 12 | 25 | 36 | 21 |
| | Micro bubbles | 2 | 2 | 2 | 1 | 1 | 1 | 2 | 5 | 16 | 10 |

Abbreviations:

Monomer

GMT: 2-(2-mercaptoethylthio)-propane-1,3-dithiol
GST: 2,3-bis(2-mercaptoethylthio)propane-1-thiol
ETS-4: 1,2-bis(2-(2-mercaptoethylthio)-3-mercaptopropylthio)ethane
BDMS: bis(2,3-dimercaptopropanyl)sulfide
BMMS: bis(2-(2-mercaptoethylthio)-3-mercaptopropyl)sulfide
PETMP: pentaerythritol tetrakis (3-mercaptopropionate)
HDI: hexamethylene-1,6-diisocyanate
IPDI: isophorone diisocyanate
$H_{12}$MDI: dicyclohexylmethane-4,4'-diisocyanate

Releasing agent

ZELEC UN: ZELEC UN™ as an acidic phosphoric ester compound manufactured by Stepan

Ultraviolet ray absorbent

HOPBT: 2-(2'-hydroxy-5'-t-octylphenyl)-2H-benzotriazole

Organic dye

HTAQ: 1-hydroxy-4-(p-toluidine) anthraquinone
PRD: perinone dye

Polymerization initiator

BTC: dibutyltin dichloride

Industrial Applicability

According to the present invention, a high-quality thiourethane based optical material may be easily prepared without striae, whitening, or microbubbles. The thiourethane based optical material according to the present invention may be widely used in a variety of fields as a substitute of conventional optical materials. In particular, the thiourethane based optical material may be used in plastic eyeglass lenses, 3D polarizing lenses which are eyeglass lenses equipped with a polarizing film, camera lenses, and the like. In addition, the thiourethane based optical material may be used in a variety of optical products such as colorant filters, ultraviolet absorption filers, and the like.

**Claims**

1. A method of preparing a thiourethane based optical material, the method comprising cast polymerizing a polymerizable composition comprising a polythiol compound and polyisocyanate compound by injecting the polymerizable composition into a mold after vacuum treating the polymerizable composition at a condition that a value of X in Formula 1 below becomes 0.01 to 2:

[Formula 1]

$$X = T \times 1/t$$

wherein T is a vacuum degree in torr, t is vacuum-treatment time (min), and T is 0.01 to 20.

2. The method according to claim 1, wherein the polyisocyanate compound is at least one compound selected from the group consisting of isophorone diisocyanate, dicyclohexylmethane-4,4-diisocyanate($H_{12}$MDI), hexamethylene diisocyanate, xylylene diisocyanate, and tolylene diisocyanate.

3. The method according to claim 1, wherein the polythiol compound is at least one compound selected from the group consisting of 4-mercaptomethyl-1,8-dimercapto-3,6-dithiaoctane, 2,3-bis(2-mercaptoethylthio)-3-propane-1-thiol, 2,2-bis(mercaptomethyl)-1,3-propanedithiol, bis(2-mercaptoethyl)sulfide, tetrakis(mercaptomethyl)methane; 2-(2-mercaptoethylthio)propane-1,3-dithiol, 2-(2,3-bis(2-mercaptoethylthio)propylthio)ethanethiol, bis(2,3-dimercaptopropanyl)sulfide, bis(2,3-dimercaptopropanyl)disulfide, 1,2-bis(2-mercaptoethylthio)-3-mercaptopropane, 1,2-bis(2-(2-mercaptoethylthio)-3-mercaptopropylthio)ethane, bis(2-(2-mercaptoethylthio)-3-mercaptopropyl)sulfide, 2-(2-mercaptoethylthio)-3-2-mercapto-3-[3-mercapto-2-(2-mercaptoethylthio)-propylthio]propylthio-propane-1-thiol, 2,2 -bis(3-mercapto-propionyloxymethyl)-butyl ester, 2-(2-mercaptoethylthio)-3-(2-(2-[3-mercapto-2-(2-mercaptoethylthio)-propylthio]ethylthio)ethylthio)propane-1-thiol, (4R,11S)-4,11-bis(mercaptomethyl)-3,6,9,12-tetrathiatetradecane-1,14-dithiol, (S)-3-((R-2,3-dimercaptopropyl)thio)propane-1,2-dithiol, (4R, 14R)-4,14-bis(mercaptomethyl)-3,6,9,12,15-pentathiaheptane-1,17-dithiol,(S)-3-((R-3-mercapto-2-((2-mercaptoethyl)thio)propyl)thio)-2-((2-mercaptoethyl)thio)propane-1-thiol, 3,3'-dithiobis(propane-1,2-dithiol), (7R,11S)-7,11-bis(mercaptomethyl)-3,6,9,12,15-pentathiaheptadecane-1,17-dithiol, (7R, 12S)-7,12-bis(mercaptomethyl)-3,6,9,10,13,16-hexathiaoctadecane-1,18-dithiol, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, pentaerythritol tetrakis(3-mercaptopropionate), trimethylolpropane tris(3-mercaptopropionate), pentaerythritol tetrakis(2-mercaptoacetate), bispentaerythritol-ether-hexakis(3-mercaptopropionate), 1,1,3,3-tetrakis(mercaptomethylthio)propane, 1,1,2,2-tetrakis(mercaptomethylthio)ethane, 4,6-bis(mercaptomethylthio)-1,3-dithian, and 2-(2,2-bis(mercaptodimethylthio)ethyl)-1,3-dithian.

4. The method according to any one of claims 1 to 3, wherein the vacuum treatment is carried out at 21 to 40°C.

5. The method according to claim 2, wherein the polymerizable composition further comprises at least one iso(thio)cyanate compound selected from the group consisting of 2,2-dimethylpentane diisocyanate, 2,2,4-trimethylhexane diisocyanate, butene diisocyanate, 1,3-butadiene-1,4-diisocyanate, 2,4,4-trimethyl hexamethylene diisocyanate, 1,6,11-undeca triisocyanate, 1,3,6-hexamethylene triisocyanate, 1,8-diisocyanate-4-isocyanate methyl octane, bis(isocyanate ethyl)carbonate, bis(isocyanate ethyl)ether, 1,2-bis(isocyanate methyl)cyclohexane, 1,3-bis(isocyanate methyl)cyclohexane, 1,4-bis(isocyanate methyl)cyclohexane, cyclohexane diisocyanate, methylcyclohexane diisocyanate, dicyclohexyl dimethylmethane isocyanate, 2,2-dimethyl dicyclohexylmethane isocyanate, bis(isocyanatobutyl)benzene, bis(isocyanatomethyl)naphthalene, bis(isocyanatomethyl)diphenylether, phenylene diisocyanate, ethylphenylene diisocyanate, isopropyl phenylene diisocyanate, dimethyl phenylene diisocyanate, diethyl phenylene diisocyanate, diisopropyl phenylene diisocyanate, trimethylbenzene triisocyanate, benzene triisocyanate, biphenyl diisocyanate, toluidine diisocyanate, 4,4-diphenylmethane diisocyanate, 3,3-dimethyl diphenylmethane-4,4-diisocyanate, bibenzyl-4,4-diisocyanate, bis(isocyanate phenyl)ethylene, 3,3-dimethoxybiphenyl-4,4-diisocyanate, hexahydro benzene diisocyanate, hexahydro diphenylmethane-4,4-diisocyanate, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatopropyl)disulfide, bis(isocyanatomethylthio)methane, bis(isocyanatoethylthio)methane, bis(isocyanatoethylthio)ethane, bis(isocyanatomethylthio)ethane, 1,5-diisocyanate-2-isocyanatomethyl-3-thiapentane,diphenylsulfide-2,4-diisocyanate, diphenylsulfide-4,4-diisocyanate, 3,3-dimethoxy-4,4-diisocyanatedibenzylthioether, bis(4-isocyanatomethylbenzene)sulfide, 4,4-methoxybenzenethioethylene glycol-3,3-diisocyanate, diphenyldisulfide-4,4-diisocyanate, 2,2-dimethyl diphenyl disulfide-5,5-diisocyanate, 3,3-dimethyl diphenyl disulfide-5,5-diisocyanate, 3,3-dimethyl diphenyl disulfide-6,6-diisocyanate, 4,4-dimethyl diphenyl disulfide-5,5-diisocyanate, 3,3-dimethoxy diphenyldi sulfide-4,4-diisocyanate, 4,4-dimethoxy diphenyl disulfide-3,3-diisocyanate, 2,5-diisocyanate thiophene, 2,5-bis(isocyanatomethyl)thiophene, 2,5-diisocyanate tetrahydrothiophene, 2,5-bis(isocyanatomethyl)tetrahydrothiophene, 3,4-bis(isocyanatomethyl)tetrahydrothiophene, 2,5-diisocyanate-1,4-dithian, 2,5-bis(isocyanatomethyl)-1,4-dithian, 4,5-diisocyanate-1,3-dithiolan, 4,5-bis(isocyanatomethyl)-1,3-dithiolan, and 4,5-bis(isocyanatomethyl)-2-methyl-1,3-dithiolan.

6. The method according to any one of claims 1 to 3, wherein the polymerizable composition further comprises a phosphoric ester compound as a mold release agent.

7. The method according to claim 6, wherein the phosphoric ester compound is one compound type or more selected from the group consisting of polyoxyethylene nonylphenol ether phosphate (in an amount of 5 wt% comprising 5 mol of ethylene oxide, 80 wt% comprising 4 mol of ethylene oxide, 10 wt% comprising 3 mol of ethylene oxide, or 5 wt% comprising 1 mol of ethylene oxide), polyoxyethylene nonylphenyl phosphate (in an amount of 5 wt% comprising 9 mol of ethylene oxide, 80 wt% comprising 8 mol of ethylene oxide, 10 wt% comprising 7 mol of ethylene oxide, or 5 wt% comprising 6 mol of ethylene oxide), polyoxyethylene nonylphenol ether phosphate (in an amount of 3 wt% comprising 11 mol of ethylene oxide, 80 wt% comprising 8 mol of ethylene oxide, 5 wt% comprising 9 mol of ethylene oxide, 6 wt% comprising 7 mol of ethylene oxide, or 6 wt% comprising 6 mol of ethylene oxide), polyoxyethylene nonylphenol ether phosphate (in an amount of 3 wt% comprising 13 mol of ethylene oxide, 80 wt% comprising 12 mol of ethylene oxide, 8 wt% comprising 11 mol of ethylene oxide, 3 wt% comprising 9 mol of ethylene oxide, or 6 wt% comprising 4 mol of ethylene oxide), polyoxyethylene nonylphenol ether phosphate (in an amount of 3 wt% comprising 17 mol of ethylene oxide, 79 wt% comprising 16 mol of ethylene oxide, 10 wt% comprising 15 mol of ethylene oxide, 4 wt% comprising 14 mol of ethylene oxide, or 4 wt% comprising 13 mol of ethylene oxide), polyoxyethylene nonylphenol ether phosphate (in an amount of 5 wt% comprising 21 mol of ethylene oxide, 78 wt% comprising 20 mol of ethylene oxide, 7 wt% comprising 19 mol of ethylene oxide, 6 wt% comprising 18 mol of ethylene oxide, or 4 wt% comprising 17 mol of ethylene oxide), and Zelec UN™.

8. An optical material prepared by the method according to any one of claims 1 to 3.

9. An optical lens comprising the optical material according to claim 8.

10. The method according to claim 9, wherein the optical lens is an eyeglass lens or a polarizing lens.

## INTERNATIONAL SEARCH REPORT

International application No.

**PCT/KR2013/007787**

### A. CLASSIFICATION OF SUBJECT MATTER

*C08G 18/70(2006.01)i, C08K 5/521(2006.01)i, G02B 1/04(2006.01)i, G02B 3/00(2006.01)i*

According to International Patent Classification (IPC) or to both national classification and IPC

### B. FIELDS SEARCHED

Minimum documentation searched (classification system followed by classification symbols)

C08G 18/70; A61L 9/04; C08G 18/38; C08L 75/04; C08G 18/18; B05D 7/00; C07C 321/04; C08G 18/52; C08G 18/75; C08K 5/521; G02B 1/04; G02B 3/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: thiourethane, polythiol, polyisocyanate, optical lens, template polymerization, optical lens, vacuum

### C. DOCUMENTS CONSIDERED TO BE RELEVANT

| Category* | Citation of document, with indication, where appropriate, of the relevant passages | Relevant to claim No. |
|---|---|---|
| X | WO 2012-112015 A2 (KOC SOLUTION CO., LTD.) 23 August 2012<br>See abstract; paragraphs [44], [46] and [55]; example 1; claims 10-11, 13-15. | 1-3,5-10 |
| A | | 4 |
| A | US 2007-0149639 A1 (HORIKOSHI, H. et al.) 28 June 2007<br>See abstract; claims 1-4; paragraphs [0001], [0010], [0086]-[0087], [0120], [0123], [0172]-[0173], [0175], [0178], [0181] and [0190]-[0193]. | 1-10 |
| A | KR 10-2009-0069297 A (MITSUI CHEMICALS, INC.) 30 June 2009<br>See abstract; claims 4, 6-9; paragraphs [0001], [0026], [0084], [0087] and [0135]. | 1-10 |
| A | KR 10-2009-0051090 A (MITSUI CHEMICALS, INC.) 20 May 2009<br>See abstract; claims 1, 6-8; paragraphs [0001], [0007]-[0008], [0054] and [0101]. | 1-10 |
| A | US 2007-0202265 A1 (BERZON, R.) 30 August 2007<br>See abstract; claim 1; paragraphs [0003], [0021]-[0029] and [0033]-[0034]. | 1-10 |
| A | KR 10-2008-0045215 A (MITSUI CHEMICALS, INC.) 22 May 2008<br>See abstract; claims 1, 11-17; paragraphs [0159]-[0160]. | 1-10 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 30 OCTOBER 2013 (30.10.2013) | **31 OCTOBER 2013 (31.10.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

# EP 2 891 672 A1

International application No.

**PCT/KR2013/007787**

| Patent document cited in search report | Publication date | Patent family member | Publication date |
|---|---|---|---|
| WO 2012-112015 A2 | 23/08/2012 | KR 10-2012-0101304 A | 13/09/2012 |
| | | WO 2012-112015 A3 | 01/11/2012 |
| US 2007-0149639 A1 | 28/06/2007 | DE 60329298 D1 | 29/10/2009 |
| | | EP 1524289 A1 | 20/04/2005 |
| | | EP 1524289 A4 | 16/08/2006 |
| | | EP 1524289 B1 | 16/09/2009 |
| | | US 2004-0254258 A1 | 16/12/2004 |
| | | WO 2004-005374 A1 | 15/01/2004 |
| KR 10-2009-0069297 A | 30/06/2009 | CN 101511895 A | 19/08/2009 |
| | | CN 101511895 B | 18/07/2012 |
| | | EP 2065414 A1 | 03/06/2009 |
| | | JP 05-175732 B2 | 03/04/2013 |
| | | US 2010-0029890 A1 | 04/02/2010 |
| | | US 2011-0065884 A1 | 17/03/2011 |
| | | WO 2008-035457 A1 | 27/03/2008 |
| KR 10-2009-0051090 A | 20/05/2009 | CN 101516952 A | 26/08/2009 |
| | | CN 101516952 B | 23/11/2011 |
| | | CN 102516487 A | 27/06/2012 |
| | | EP 2075271 A1 | 01/07/2009 |
| | | JP 05026432 B2 | 12/09/2012 |
| | | JP 2012-136702 A | 19/07/2012 |
| | | KR 10-2011-0133631 A | 13/12/2011 |
| | | US 2010-0010192 A1 | 14/01/2010 |
| | | US 8044165 B2 | 25/10/2011 |
| | | WO 2008-047626 A1 | 24/04/2008 |
| US 2007-0202265 A1 | 30/08/2007 | EP 1987377 A2 | 05/11/2008 |
| | | WO 2007-096425 A2 | 30/08/2007 |
| | | WO 2007-096425 A3 | 18/10/2007 |
| KR 10-2008-0045215 A | 22/05/2008 | AU 2006-280850 A1 | 22/02/2007 |
| | | AU 2006-280851 A1 | 22/02/2007 |
| | | CN 101228202 A | 23/07/2008 |
| | | CN 101228202 B | 18/05/2011 |
| | | CN 101228202 C0 | 23/07/2008 |
| | | CN 101228203 A | 23/07/2008 |
| | | CN 101228203 B | 28/11/2012 |
| | | CN 101228203 C0 | 23/07/2008 |
| | | EP 1923415 A1 | 21/05/2008 |
| | | EP 1923415 B1 | 08/12/2010 |
| | | EP 1925629 A1 | 28/05/2008 |
| | | EP 1925629 B1 | 29/12/2010 |
| | | JP 04934039 B2 | 16/05/2012 |
| | | JP 04934040 B2 | 16/05/2012 |
| | | KR 10-0994313 B1 | 12/11/2010 |
| | | US 2009-0099329 A1 | 16/04/2009 |

14

INTERNATIONAL SEARCH REPORT
Information on patent family members

International application No.

**PCT/KR2013/007787**

| Patent document cited in search report | Publication date | Patent family member | Publication date |
|---|---|---|---|
| | | US 2009-0227745 A1 | 10/09/2009 |
| | | US 7932327 B2 | 26/04/2011 |
| | | US 8304506 B2 | 06/11/2012 |
| | | WO 2007-020817 A1 | 22/02/2007 |
| | | WO 2007-020818 A1 | 22/02/2007 |

Form PCT/ISA/210 (patent family annex) (July 2009)

**EP 2 891 672 A1**

**Patent documents cited in the description**

- KR 100136698
- KR 100051275
- KR 100051939
- KR 100056025
- KR 100040546
- KR 100113627